# EUROPEAN PATENT APPLICATION

(11) **EP 2 040 216 A2**
(43) Date of publication of application: **25.03.2009**
(21) Application number: 08164243.1
(22) Date of filing: 12.09.2008
(51) Int. Cl.: G06Q 30/00

(54) **Filter for individual selection and transfer into electronic advertisements or information**

(30) Priority: 12.09.2007 US 971612 P
(71) Applicant: Advanced Breeding Sweden AB, 26050 Billesholm (SE)
(72) Inventor: Mathiesen, Paw, 260 50, Billesholm (SE); Svensson, Joel, 310 31, Eldsberga (SE); Fainelli, Matteo, 413 03, Göteborg (SE)
(74) Representative: Valea AB

(57) **Abstract**

The present invention relates to a method for preventing physical delivery of advertisements/information, whereby
a. a tag, optionally marked in some other way concerning non-physical delivery is arranged in the neighbourhood of a mail delivery point,
b. the tag, optionally marked in some other way is connected to a data base to admit delivery of selectively elected information in at least one electronic form.

## Description

### Technical field

The present invention relates to transformation of advertisements or information from a commercial source, such as a dealer, authority, private person or NGO from being physical to being electronic. The consumer or resident will carry out a selection in order to individually select which advertisement or information is of interest and which will then be received in an electronic form, e.g., as SMS, MMS, voice mail, blog, e-mail or the similar.

### Background of the invention

It is commonly known that the environment will suffer from the western way of living leading to an increased consumption of resources in the form of energy, such as oil, electricity, as well as raw material such as wood. Part of the resources being used today are used completely in waste. The physical advertisements being distributed by federal post, advertising companies or the similar, are namely as a rule, not specified for the receiver but are distributed to all within a given area such as a city, commune, region, county, administrative council, or country. This means an increased consumption of resources such as paper, including paper production, distribution, and, after use or non-use, waste handling. The reason for this is lack of information in that the producer/sender and the recipient/consumer of physical advertisements cannot communicate. If the producer/sender of information should be able to get information about the recipient/consumer this should reduce the physical flow of information as it takes place today. This problem can be solved to some extent by hindering the reception of advertisements by using a tag on the door, mail-input or mailbox, denying this type of information. In this way, however, all advertisements are rejected, optionally with the exception of public authority information. The information issue is in this case not yet solved in any other way than that producer/sender does not arrive at the unknown addressee and may, optionally become aware of the fact that a smaller population has been reached. Today's technology has the full potential to provide conditions to provide the producer/sender in an efficient way with information from the recipient/consumer, which allow for a strong limitation of the physical flow. This type of communication should be positive to both the producer/sender as well as the recipient/consumer as well as the society. The three parties can be favoured primarily within four areas, viz., the environmental aspect, time aspect, information efficiency, and from an economical standpoint.

### Environment - Producer/sender

As the producer/sender can get information about the recipient/consumer the physical distribution is reduced as a large part of of what the recipient/consumer is not interested in will be sent off. The recipient/consumer may be interested in general, but the time point is not the right one. The consequences will be that the producer/sender can reduce consumption of raw material as well as transport, which saves energy such as electricity, fuel and paper raw material.

### Environment - Recipient/consumer

The recipient/consumer need not to transport the information/paper waste to the recovery site, i.e., less emissions as the frequency between transports needed is reduced.

### Environment - Society

The society need not to bother about emissions as they will not occur.

### Time - Producer/sender

The producer/sender of the information can adjust its production means from quantity to quality. Thereby the share of successful information deliveries will increase, i.e., the information leads to action.

### Time - Recipient/consumer

The recipient/consumer will get rid of physical sorting of information, need not to leave and get hold of information.

### Time - Society

The infrastructure can be made more efficient which leads to less building of e.g., roads for transport of information.

### Information - Producer/sender

If the producer/sender of the information knows what the recipient/consumer wants then both parties can have a more efficient attitude to the information. There will be more successful deliveries, i.e., information ends in action.

### Information - Recipient/consumer

If the recipient/consumer of the information informs the producer/sender of what he/hers need is both parties can have a more efficient attitude to the information. Information will lead to action.

### Economy - Producer/sender

The producer/sender will reduce the economical burden as failed deliveries provide (e.g., printing costs) i.e., information that does not lead to action is a failure.

### Economy - Recipient/consumer

The recipient/consumer gets rid of the transport costs of the information to the recovery site, thus a lower cost as the frequency between the transports still needed is lowered.

### Economy - Society

Less handling of waste, as the load of falied deliveries, i.e., information which does not provide action, is reduced.

W09808202 discloses an advertising system and method that: (1) provides an advertiser with a useful promotional item to be distributed to individuals in that advertiser's target market of potential consumers; (2) provides an advertiser's potential consumers with a useful system for identifying, registering and retrieving lost personal property items; and (3) provides an advertiser with a marketing database, customized to that advertiser's specifications, containing contact information for recipients of the promotional item from that advertiser.

The useful item intended to be distributed as part of the present invention is an identification tag, having an advertisement, a unique tag identifier and a contact identifier of a processing facility that can be contacted in the event the tag is found. The tag is intended to be distributed by an advertiser to individuals from a targeted group of potential consumers. The tags' recipients are then intended to attach the tag to a personal item. The tags' recipients are also intended to register their tag identifier and corresponding personal contact information with a processing facility that will incorporate such information into an information storage and retrieval system. If a personal item bearing a tag is found, its finder is prompted by the tag's contact identifier to contact the processing facility to report the find. The finder can report the found item by referring to its tag identifier. The processing facility will then match the tag identifier of the found tag to its corresponding contact information stored in the information storage and retrieval system, and accordingly arrange for the found item to be picked up from the finder and returned to its proper owner.

The information storage and retrieval system will also be used to compile a master database of all registered consumers' contact information. The master database can be sorted and specific information can be extracted to generate a customized marketing database according to the specifications of any individual advertiser. This customized marketing database will then be communicated to an advertiser for that advertiser's potential use for a direct mail advertising campaign. The marketing database distributed to each advertiser can include contact information about consumers who have received a tag bearing that particular advertiser's display ad.

### Summary of the invention

However, today there is no possibility to obtain ones tag, optionally marked in some way, and simultaneously order the information set by the parameters individually chosen, which information then is received preferably electronically e.g., as SMS, MMS, blog, e-mail, or the similar. The aim of the invention is thus to obtain this unique opportunity.

In particular the invention relates to a method for preventing physical delivery of advertisements/information, characterized in that
a) a tag, optionally marked in some other way concerning non-physical delivery is arranged in the neighbourhood of a mail delivery point,
b) the tag, optionally marked in some other way is connected to a data base to admit delivery of selectively elected information in at least one electronic form.

In a preferred embodiment of the invention a registration is made on a web site related to the selectively elected information to be received, an advertisement/information profile is elected for delivery of said information in electronic form, and a tag is ordered to block all physical undesired advertisement/information.

In a preferred embodiment the tag is provided with an individual identification code e.g. a colour code, bar code or RFID or similar..

In a preferred embodiment the tag is an adhesive provided tag, such as glue or magnetized material.

In a preferred embodiment the tag is a blue-tooth sender.

In a preferred embodiment the tag is an electronic chip to become enabled.

In a preferred embodiment the information is provided by SMS.

In a preferred embodiment the information is provided by MMS.

In a preferred embodiment the information is provided by blog.

In a preferred embodiment the information is provided by web access account, voice mail, or e-mail.

Thus the aim of the present invention is to provide the individual with a possibility to get control over all information or advertisements within a specific field of interest in a simple and efficient as well as environmentally effective way according to the individual interest. This control may, e.g., be to get information of all new cars, only European ones, only German ones, only BMWs, or only BMW station wagon versions. One may also have the possibility to exclude advertisements or information from certain companies or authorities although these actors may be included generally in a certain category. Thus such combinations can be made within the fields of e.g., electronics, food, clothing, white goods, children's equipment and so on, but the prize information possibilities are eternal.

A further aim of the invention is to provide the individual with the possibility to have access to this specific advertisement or information independent of where one happens to be, as the information can be delivered in the form of a SMS, or even be read in a shop having access e.g. to the Internet after having logged on to a personal site.

Another aim is to provide the residents with the possibility of getting rid of the physical handling of advertisements or information, i.e., moving the advertisements from the mailbox to the waste cabinet or recovery station, optionally via the flat.

### Mode of action

The individual to participate in the individualized advertisements and information exchange enters a specific site, i.e., a data base, designated for the purpose on the Internet, registers his/hers name and password enters the advertisement/information profile part and selects the advertisements and information wanted to be provided. When the registration is finished the tag is delivered, which tag then is placed onto the door, mailbox or the similar to stop any general deliver of such material. Instead of a tag or similar the marking can be electronically.

The election of information profile may also be carried out via phone or other medium.

The tag may include a bar code, colour code or the similar to facilitate a reading by the postmen or interested party to get back to the said site in order to get in touch with the tag holder. In case of a colour code, different colours may indicate different subscriptions of daily paper(-s) to facilitate for the paper deliverer to get the right paper in.

The tag may be in the form of a tag provided with an adhesive to attach to a surface, but may also be a blue-tooth sender providing a blocking signal to the postman, or be a sender providing a blocking signal to the post-office or distributor of ads and information to block the activity already at such an early stage, depending on how the distribution is organized. In the latter case such blockage may be issued by the data base to which the tag is related, so that the data base provides different distributors with the appropriate information. Thus the blockage is an electronic one, instead of physical, but still it stops a physical activity. In case it is a sender it may be a blue-tooth sender or an chip being activated by the distributor arriving at the delivery site. Thus the term tag as used herein encompasses the above identified different means.

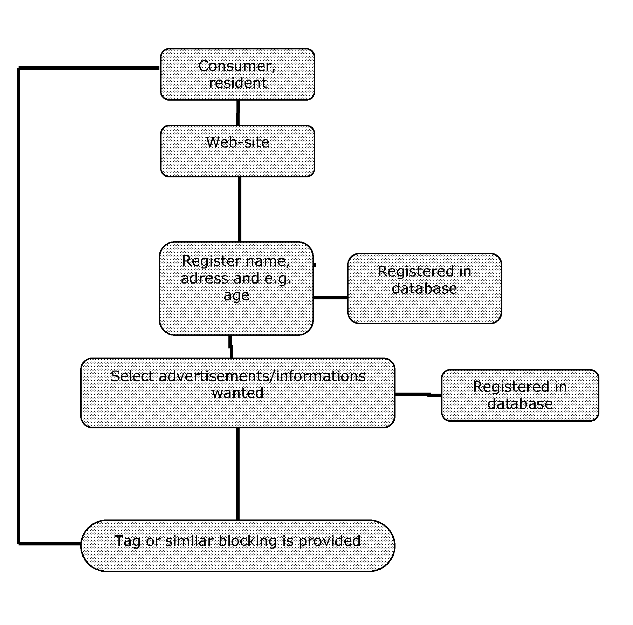

Thus the active individualized election of information to be retrieved in short consists of a registration on a site, a data base, election of an advertisement/information profile to get said advertisement/information delivered in an electronic form, and the ordering of a tag to block any physical delivery of unwanted advertisement/information material. Thus the present action is an active filter or sieve to get the adequate information wanted or needed. Thus one eliminates that wanted or needed information drowns in the flood of unwanted information delivered. The active choice thus means that one obtains, in a simple way to get the total information requested. The information is obtained via SMS, MMS, blog, e-mail and or via a site to which the subscriber will log on, such as via a web access. The scheme of the method of the invention is shown in the attached Figure providing a flow sheet.

## Claims

1. Method for preventing physical delivery of advertisements/information,
**characterized in that**
a) a tag, optionally marked in some other way concerning non-physical delivery is arranged in the neighbourhood of a mail delivery point,
b) the tag, optionally marked in any other way, is associated to a data base to admit delivery of individually, selectively elected information in at least one electronic form.

2. Method according to claim 1, wherein a registration is made on a web site related to the selectively elected information to be received, an advertisement/information profile is elected for delivery of said information in electronic form, and a tag is ordered to block all physical undesired advertisement/information.

3. Method according to claims 1-2, wherein the tag is provided with an individual identification code, e.g. a colour code, bar code or RFID or similar.

4. Method according to claim 1, wherein the tag is an adhesive provided tag.

5. Method according to claim 1, wherein the tag is a blue-tooth transmitter or similar.

6. Method according to claim 1, wherein the tag is an electronic chip to become enabled.

7. Method according to claim 1, wherein the information is provided by SMS.

8. Method according to claim 1, wherein the information is provided by MMS.

9. Method according to claim 1, wherein the information is provided by blog.

10. Method according to claim 1, wherein the information is provided by web access account, voice mail or e-mail.
